# FASCICULE DE BREVET EUROPEEN

(11) **EP 3 231 152 B1**
(45) Date de publication et mention de la délivrance du brevet: **25.01.2023**
(21) Numéro de dépôt: 15807866.7
(22) Date de dépôt: 08.12.2015
(51) Int. Cl.: G06F 21/60, H04L 9/08, H04L 9/40

(54) **PROCÉDÉ DE CHIFFREMENT DYNAMIQUE DE DONNÉES, ET PROCÉDÉ DE CONTRÔLE DE DROITS DE DÉCHIFFREMENT ASSOCIÉ**
DYNAMISCHES DATENVERSCHLÜSSELUNGSVERFAHREN UND ZUGEHÖRIGES VERFAHREN ZUR KONTROLLE VON ENTSCHLÜSSELUNGSRECHTEN
DYNAMIC DATA ENCRYPTION METHOD, AND ASSOCIATED METHOD FOR CONTROLLING DECRYPTION RIGHTS

(30) Priorité: 08.12.2014 FR 1462056; 08.12.2014 FR 1462042
(43) Date de publication de la demande: 18.10.2017
(73) Titulaire: Citypassenger, 91940 Les Ulis (FR)
(72) Inventeur: FALEMPIN, Sven, 91940 Les Ulis (FR); DUVAL, Bruno, 91940 Les Ulis (FR)
(74) Mandataire: Regimbeau
(86) Numéro de dépôt international: PCT/EP2015/079015
(87) Numéro de publication internationale: WO 2016/091898

(56) Documents cités:
- EP-A2- 1 655 920
- GB-A- 2 436 910
- US-A- 5 237 614
- US-A1- 2004 086 124
- US-B1- 6 185 681

## Description

### DOMAINE GENERAL

L'invention se rapporte au domaine du chiffrement de données destinées à transiter dans un réseau.

L'invention concerne un procédé de chiffrement de données destinées à transiter dans un réseau.

### ETAT DE L'ART

Le chiffrement asymétrique est une technique bien connue pour chiffrer des données transitant dans un réseau dans lequel communiquent plusieurs terminaux d'utilisateurs.

Conventionnellement, un premier terminal chiffre des données avec une clé publique du destinataire, et un deuxième terminal déchiffre les données chiffrées au moyen d'une clé privée et vérifie une signature de l'émetteur avec sa clé publique.

Toutefois, un hacker peut tenter de deviner la clé publique utilisée par le premier terminal, par exemple en interceptant les données chiffrées.

Le document US5237614 décrit le chiffrement de fichiers et de dossiers par un terminal à l'aide d'une clé de chiffrement propre à un utilisateur du terminal. Toutefois, cette clé de chiffrement est transmise par un serveur d'authentification au terminal au cours de l'utilisation du terminal par l'utilisateur. La clé de chiffrement peut ainsi être interceptée par un hacker au cours de sa transmission du serveur au terminal, et usurper l'identité de l'utilisateur en utilisant la clé interceptée.

### PRESENTATION DE L'INVENTION

Un but de l'invention est mettre en oeuvre un chiffrement de données, avant leur émission dans un réseau, qui est plus difficile à « hacker » par une personne capable d'intercepter les données chiffrées dans le réseau.

Afin d'atteindre ce but l'invention propose un procédé de chiffrement mis en oeuvre par un terminal comprenant un système d'exploitation accessible par plusieurs utilisateurs et un module de chiffrement de données à destination d'un autre terminal tel que décrit par la revendication indépendante 1.

Comme la clé de chiffrement utilisée est propre à l'utilisateur, tout nouvel accès au système d'exploitation par un nouvel utilisateur provoque un changement de paramétrage du module de chiffrement. De la sorte, il devient plus difficile pour un hackeur de déchiffrer les données émises par le terminal puisque ce dernier ne sait pas forcément qui est l'utilisateur actuel du terminal, et donc quelle clé de chiffrement est clé a été utilisée à un instant t pour chiffrer les données.

De plus, comme la clé de chiffrement est présente dans la mémoire du terminal avant la détection ou que cette clé est générée par le terminal, cette clé de chiffrement n'a pas besoin d'être communiquée à un serveur distant comme proposé dans les documents de l'art antérieur cités en introduction. Il n'est donc pas possible pour un hacker d'usurper l'identité de l'utilisateur en utilisant sa clé, après l'avoir récupérée, puisque cette clé ne transite pas sur le réseau.

Le procédé de chiffrement selon l'invention peut également être complétée par les caractéristiques suivantes, prises seules ou en une quelconque de leurs combinaisons techniquement possibles.

Le procédé peut comprendre en outre les étapes de :
- détection de fermeture de la session d'accès au système d'exploitation par l'utilisateur,
- configuration du module de chiffrement au moyen d'une clé factice en réponse à la détection de fermeture.

La détection peut comprendre un abonnement à un signal défini par le système d'exploitation, le signal étant représentatif d'une ouverture ou d'une fermeture de session d'accès, et une interception du signal.

Les étapes du procédé étant mises en oeuvre pour une session d'accès courante par l'utilisateur et une session d'accès suivante par l'utilisateur, la clé de chiffrement avec laquelle le module de chiffrement est paramétré au cours de la session d'accès suivante peut être choisie différente de la clé de chiffrement avec laquelle le module de chiffrement est paramétré au cours de la session d'accès courante.

Chaque clé peut être générée par le module de chiffrement.

Le module de chiffrement peut être intégré à une carte réseau indépendante du système d'exploitation.

Le module de chiffrement peut chiffrer les données utiles de trames selon la norme IEEE 802 LAN au moyen de la clé de chiffrement.

L'invention concerne également un procédé de déchiffrement de données préalablement chiffrées au moyen du procédé de chiffrement qui précède.

L'invention concerne également un produit programme d'ordinateur comprenant des instructions de code pour l'exécution des étapes du procédé de chiffrement ou de déchiffrement proposé, lorsque ce produit programme est exécuté par un terminal.

L'invention concerne en outre un kit de chiffrement comprenant :
- un module de chiffrement adapté pour chiffrer des données au moyen d'une clé de chiffrement, et
- un produit programme d'ordinateur selon la revendication précédente, adapté pour configurer la clé de chiffrement utilisée par le module de chiffrement.

Ce kit peut comprendre une carte réseau, la carte réseau intégrant le module de chiffrement.

L'invention concerne également un procédé de contrôle de droits de déchiffrement de données comprenant les étapes suivantes mises en oeuvre par un serveur de contrôle:
- réception d'une clé de déchiffrement adaptée pour déchiffrer des données chiffrées au moyen d'une clé de chiffrement propre à un utilisateur,
- réception d'informations indiquant une ouverture et/ou une fermeture d'accès, par l'utilisateur, au système d'exploitation d'un premier terminal,
- réception d'une requête émise par un deuxième terminal, la requête demandant une clé de déchiffrement pour déchiffrer des données chiffrées émanant du premier terminal,
- envoi de la clé de déchiffrement au deuxième terminal en réponse à la requête, en fonction de la dernière information reçue du premier terminal.

Le procédé de contrôle de droits de déchiffrement peut comprendre les caractéristiques optionnelles suivantes.
- la clé de déchiffrement est envoyée au deuxième terminal si la dernière information reçue indique une ouverture d'accès par l'utilisateur,
- la clé de déchiffrement n'est pas envoyée au deuxième terminal si la dernière information reçue indique une fermeture d'accès par l'utilisateur ;
- la réception d'une adresse identifiant le premier terminal, la réception d'une adresse identifiant le deuxième terminal, dans lequel la clé de déchiffrement est envoyée au deuxième terminal en fonction des deux adresses ;
- la réception d'un identifiant de l'utilisateur du premier terminal, la réception d'un identifiant d'un utilisateur du deuxième terminal, dans lequel la clé de déchiffrement est envoyée au deuxième terminal en fonction des deux identifiants.

L'invention concerne en outre un serveur de contrôle de droits de déchiffrement comprenant :
- une mémoire adaptée pour mémoriser une clé de déchiffrement, la clé de déchiffrement étant adaptée pour déchiffrer des données chiffrées au moyen d'une clé de chiffrement propre à un utilisateur,
- une interface réseau adaptée pour recevoir :
   o des informations indiquant une ouverture d'accès par l'utilisateur au système d'exploitation d'un premier terminal,
   o recevoir une requête émise par un deuxième terminal, la requête demandant une clé de déchiffrement pour déchiffrer des données chiffrées émanant du premier terminal, et
- une unité de contrôle adaptée pour commander l'envoi de la clé de déchiffrement au deuxième terminal via l'interface réseau en réponse à la requête, en fonction des informations reçues.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 représente schématiquement un terminal selon un mode de réalisation de l'invention.
La figure 2 représente un réseau comprenant deux terminaux selon la figure 1 et un serveur de contrôle.
Les figures 3 et 4 sont des organigrammes d'étapes d'un procédé de chiffrement selon un mode de réalisation de l'invention.
La figure 5 est un organigramme d'étapes d'un procédé de déchiffrement selon un mode de réalisation de l'invention.
La figure 6 est un organigramme d'étapes d'un procédé de contrôle de droits de déchiffrements selon un mode de réalisation de l'invention.

Sur l'ensemble des figures, les éléments similaires portent des références identiques.

### DESCRIPTION DETAILLEE DE L'INVENTION

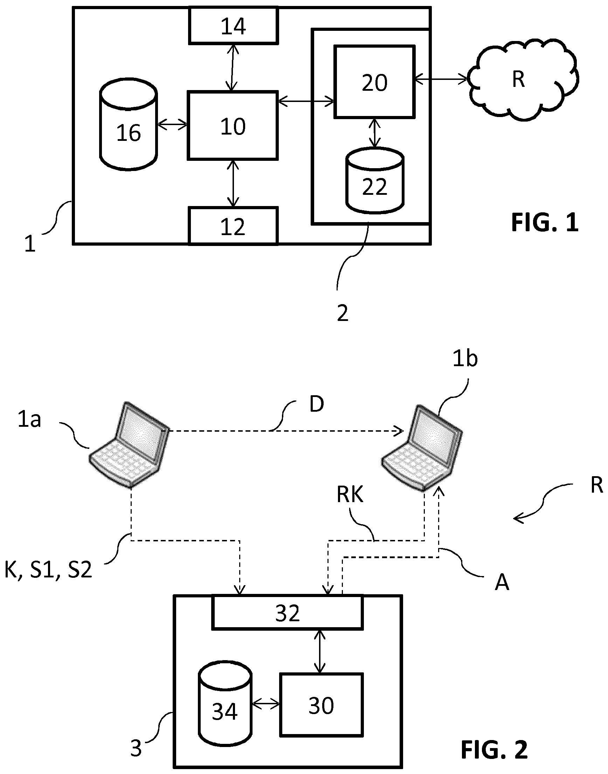

En référence la figure 1, un terminal 1 comprend une unité de traitement de données 10, des moyens de saisie 12, un écran d'affichage 14, une mémoire 16, et une interface réseau 2.

Dans le présent document, on définit un terminal comme un équipement destiné à être utilisé par un utilisateur.

L'unité de traitement de données 10 est adaptée pour exécuter un programme du type système d'exploitation, mémorisé par la mémoire 16.

L'unité de traitement de données 10 est également configuré pour commander l'affichage sur l'écran d'affichage 14 de données graphiques du système d'exploitation. L'unité de traitement de données est également configurée pour traiter des données saisies par un utilisateur du terminal 1 via les moyens de saisie 12.

Les moyens de saisie 12 comprennent par exemple une souris, un clavier, une interface tactile, etc. La mémoire 16 peut être un mémoire de type disque dur, SSD, éventuellement sous la forme d'une clé USB amovible.

Le terminal 1 peut se présenter sous différentes formes : ordinateur de bureau, ordinateur portable, tablette tactile, téléphone mobile de type « smartphone », etc.

Le système d'exploitation exécuté par l'unité de traitement de données 10 est configuré pour être utilisable par plusieurs utilisateurs.

Le système d'exploitation est configuré pour accéder à des données privées de chaque utilisateur, ces données privées étant mémorisées dans la mémoire 16.

Le système d'exploitation est configuré pour être utilisé par un seul utilisateur à la fois. En variante, le système d'exploitation est utilisable par plusieurs utilisateurs à la fois.

Quel que soit le nombre d'utilisateurs pouvant utiliser simultanément le système d'exploitation, on supposera dans la suite que le système d'exploitation est configuré de sorte qu'un utilisateur du système d'exploitation ne peut pas accéder aux données privées d'un autre utilisateur.

Le système d'exploitation comprend une pile réseau adaptée pour interagir avec la carte réseau 2.

Le terminal 2 comprend également un programme d'ordinateur de type applicatif adapté pour interagir avec le système d'exploitation. Ce programme applicatif est par exemple installable dans le terminal 1 indépendamment de l'installation du système d'exploitation.

Ce programme applicatif est configuré pour communiquer avec le module de chiffrement embarqué dans la carte réseau 2.

Le programme applicatif est configuré pour s'exécuter au démarrage du système d'exploitation, suite à la mise sous tension du terminal 1.

Le programme applicatif est en outre configuré pour détecter l'ouverture d'une session d'accès au système d'exploitation par un utilisateur, et la fermeture d'une telle session.

A titre d'exemple, si le système d'exploitation est du type GNU/Linux, le programme applicatif peut être un « daemon ». Si le système d'exploitation est du type Windows^{®}, le programme applicatif peut être un « service » au sens de l'architecture Windows^{®}.

Par ailleurs, l'interface réseau 2 se présente sous la forme d'une carte réseau amovible connectable à une carte mère (non-illustrée) du terminal 1.

L'interface réseau 2 dispose d'une adresse MAC unique dans le réseau R.

L'interface réseau 2 comprend un module de chiffrement 20 et une mémoire interne 22.

Le module de chiffrement 20 est adapté pour appliquer un chiffrement à des données utiles émanant de l'unité de traitement de données 10 et à émettre sur le réseau R, moyennant un programme de chiffrement.

En d'autres termes, toute donnée destinée à être émise sur un réseau par le terminal peut être chiffrée par le module de chiffrement 20.

Le module de chiffrement 20 est également adapté pour appliquer un déchiffrement à des données chiffrées reçues du réseau R moyennant un programme de déchiffrement, et transmettre les données déchiffrées à l'unité de traitement de données 10.

Le module de chiffrement 20 est en outre configuré pour accéder en lecture et en écriture à la mémoire interne 22 de la carte réseau 2.

Dans un mode de réalisation particulier non limitatif que l'on prendra en exemple dans la suite, les données utiles faisant l'objet d'un chiffrement sont les données utiles (« payload » en anglais) de trames selon la norme IEEE 802 LAN.

En référence la figure 2, un réseau R comprend un premier terminal 1a et un deuxième terminal 1b, tous deux conformes à la description qui précède en relation avec la figure 1.

Le réseau R comprend en outre un serveur 3 de contrôle de droits de déchiffrement.

Sont représentés en pointillés sur la figure 2 des échanges de données entre le terminal 1A, le terminal 1B, et le serveur de contrôle 3. Ces différentes données sont échangées lors de la mise en oeuvre d'un procédé de communication dont les étapes seront décrites par la suite.

Le serveur 3 comprend une unité de contrôle 30, une interface réseau 32, et une mémoire interne 34.

L'interface réseau 32 est adaptée pour communiquer avec les interfaces réseau respectives 2 des terminaux 1a et 1b.

L'unité de traitement 30 est connectée à l'interface réseau 32 ainsi qu'à la mémoire 34. Plus précisément l'unité de traitement 30 a accès en lecture et en écriture à la mémoire 34.

La mémoire 34 est adaptée pour mémoriser une base de données mettant en relation différents types de données.

On va maintenant décrire un procédé de communication mis en oeuvre par le terminal 1a, le terminal 1b, et le serveur 3.

On se place dans un contexte de transmission de données utiles depuis le terminal 1a au terminal 1b.

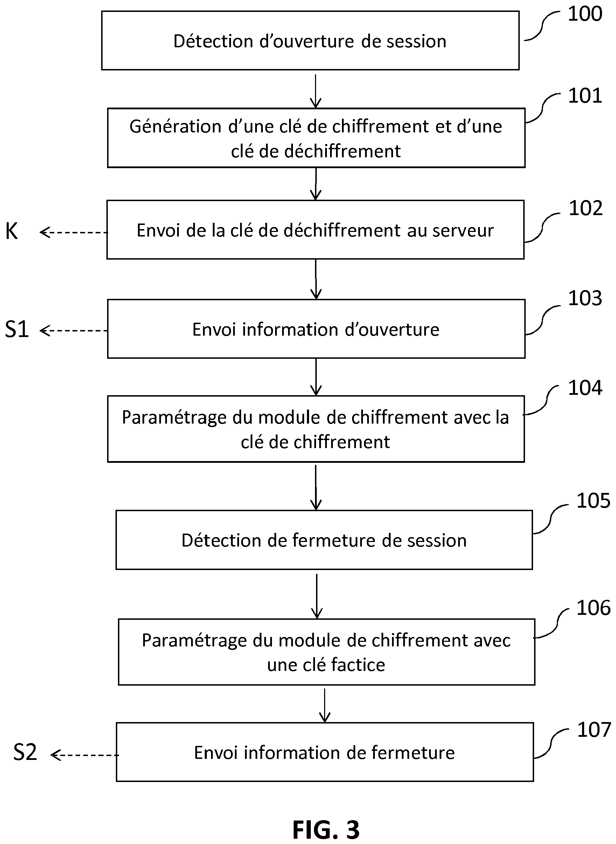

En référence à la figure 3, le terminal 1a met en oeuvre les étapes suivantes.

Le programme applicatif détecte 100 une ouverture de session d'accès au système d'exploitation par un utilisateur.

L'ouverture de session comprend typiquement :
- affichage, sur l'écran d'affichage 14, d'une page de connexion invitant un utilisateur à saisir un identifiant unique d'utilisateur et/ou un mot de passe associé à l'identifiant,
- saisie, par un utilisateur, via les moyens de saisie 12, d'un identifiant unique d'utilisateur et/ou d'un mot de passe associé à cet identifiant,
- vérification par le système d'exploitation de l'identifiant et/ou du mot de passe saisis,
- en fonction du résultat de la vérification,
   o chargement de paramètres du système d'exploitation propres à l'utilisateur (paramètres définissant des programmes à lancer automatiquement, paramètres d'affichage, etc.),
   o affichage d'un menu via lequel l'utilisateur peut accéder à des services du système d'exploitation, accéder à ses données privées, etc.

La détection 100 d'ouverture de session comprend par exemple un abonnement du programme applicatif à un signal généré par le système d'exploitation en réponse à une telle ouverture de session.

Après une telle détection 100, le terminal 1 génère 101 une paire de clés asymétriques. La paire de clés comprend une clé de chiffrement, et une clé de déchiffrement K correspondant à cette clé de chiffrement. En d'autres termes, la clé de déchiffrement K est adaptée pour déchiffrer des données chiffrées au moyen de la clé de chiffrement.

Les deux clés générées sont propres à l'utilisateur ayant ouvert la session d'accès au système d'exploitation.

Les deux clés peuvent être générées par exemple par le module de chiffrement 20 de la carte réseau de puis être mémorisé dans la mémoire interne 22 de la carte réseau 2, après transmission d'un message généré par le programme applicatif à destination du module de chiffrement 20, le message annonçant qu'une session d'accès a été ouverte par l'utilisateur.

En variante, les clés sont générées directement par le système d'exploitation est mémorisée dans la mémoire 16.

Les deux clés peuvent être générées à chaque nouvelle ouverture de session de l'utilisateur. Dans ce cas, il s'agit de clés temporaires.

En variante, la génération 101 des clés est mise en oeuvre lors de la première ouverture de session par l'utilisateur pour accéder au système exploitation du terminal 1a. Lors d'ouvertures de session ultérieures par l'utilisateur, les clés sont chargées depuis la mémoire 16 ou bien la mémoire 22.

La clé de chiffrement a vocation à être connue de l'utilisateur seul.

La clé de déchiffrement K est envoyée 102 au serveur de contrôle 3. La clé de déchiffrement K a vocation à être utilisée par des tiers. Toutefois, on verra que le serveur de contrôle détermine une liste limitée de tiers autorisés à utiliser la clé de déchiffrement.

Une information S1 représentative de l'ouverture de la session d'accès au système d'exploitation par l'utilisateur, dite information d'ouverture, est par ailleurs générée par le programme applicatif (ou bien par le module de traitement 20).

L'information d'ouverture S1 comprend par exemple un champ positionné à une valeur « session ouverte », et l'adresse MAC du terminal 1a.

L'information d'ouverture S1 peut en outre comprendre un identifiant unique de l'utilisateur (par exemple l'identifiant saisie par l'utilisateur pour ouvrir la session d'accès au système d'exploitation, ou bien un autre identifiant spécifique à l'utilisateur), et/ou un horodatage. L'horodatage est représentatif de l'instant auquel l'ouverture de session a été détectée.

L'information d'ouverture est envoyée 103 par le terminal 1a au serveur de contrôle 3.

Le programme applicatif détecte 105 une fermeture de la session ouverte par l'utilisateur. Cette détection peut fonctionner de la même manière que l'étape de détection d'ouverture 100. En pratique, la fermeture peut être mise en oeuvre lorsque l'utilisateur clique sur un bouton de déconnexion affichée sur le menu du système d'exploitation via l'écran 14.

En réponse à la détection de fermeture 105, le programme applicatif configure le module de chiffrement avec une clé factice, qui n'est propre à aucun utilisateur du système d'exploitation. La clé factice peut par exemple être générée aléatoirement ou être une clé dont la valeur ne peut pas être affectée à un utilisateur (valeur « zéro », etc.).

On suppose ici que la clé factice est choisie telle qu'elle introduit une perte d'information lors de son utilisation par le module de chiffrement. En d'autres termes, les données émises par le module de chiffrement paramétré avec la clé factice ne sont pas en tant que telle des données chiffrées, mais du bruit indéchiffrable.

Même lorsqu'un utilisateur est déconnecté du système d'exploitation, il se peut que le système d'exploitation commande l'émission de données sur le réseau R ; la clé factice permet d'éviter que ces données émises « silencieusement » hors connexion sont chiffrées avec la clé privé de l'utilisateur, et limite ainsi les possibilités d'attaques visant à déterminer une telle clé de chiffrement, par interception et analyse des données chiffrées émises dans le réseau.

Une information S2 indicative de de la fermeture de la session ouverte par l'utilisateur, dite information de fermeture, est générée par le programme applicatif ou bien le module de traitement 20.

L'information de fermeture S2 comprend par exemple un champ du même type que celui de l'information d'ouverture S1, mais positionné une valeur « session fermée » et l'adresse MAC du terminal 1a.

L'information de fermeture S2 peut en outre comprendre l'identifiant unique de l'utilisateur contenus dans l'information d'ouverture S1 précédemment envoyée au serveur 2, et/ou un horodatage. L'horodatage est représentatif de l'instant auquel la fermeture de session a été détectée.

Le terminal 1a envoie 106 au serveur de contrôle 3 l'information de fermeture S2.

L'étape d'envoi 102 de la clé de déchiffrement K peut être mise en oeuvre à n'importe quel moment, après la génération 101 et avant la détection de fermeture 103. La clé de déchiffrement K et l'information d'ouverture S1 peuvent par exemple être envoyées dans un même message.

Si les informations d'ouverture S1 et de fermeture S2 ne comprennent pas d'horodatage, elles sont envoyées immédiatement après les détections correspondantes. Dans ce cas, le temps écoulé entre l'ouverture (respectivement fermeture) de session et l'instant auquel le serveur 3 reçoit l'information d'ouverture (respectivement de fermeture) est sensiblement égale au temps de propagation de l'information depuis le terminal 1a au serveur 3.

Comme on le verra dans la suite, les informations d'ouverture et de fermeture et la clé de déchiffrement sont utilisées par le serveur de contrôle 3 pour déterminer si l'utilisateur du terminal 1b a le droit de déchiffrer des données émises par le terminal 1a.

Les étapes décrites ci-dessus sont mises en oeuvre par le programme applicatif de façon répétée à chaque fois qu'une nouvelle ouverture de session d'accès au système d'exploitation est détectée.

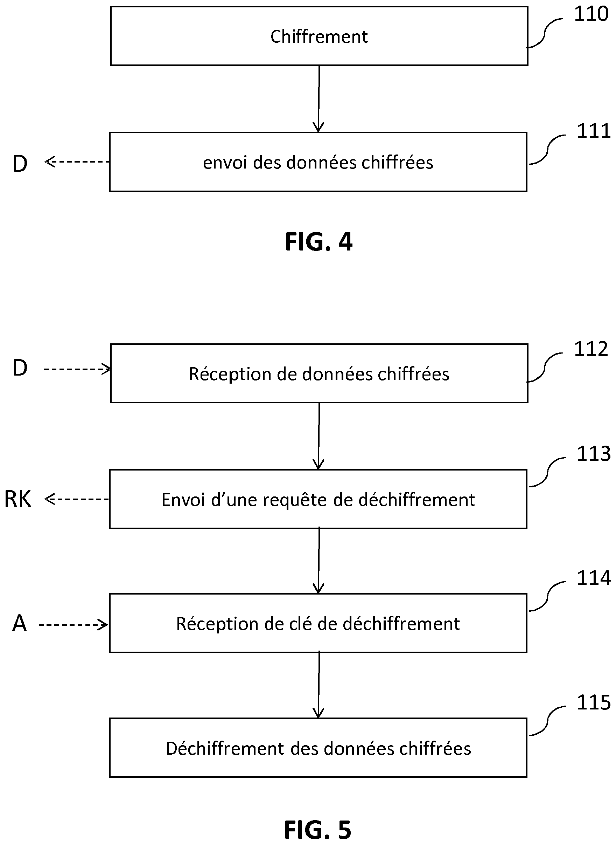

En référence à la **figure 4****,** le module de chiffrement 20 met en oeuvre les étapes suivantes.

Le module de chiffrement chiffre des données utiles à destination du terminal 1B avec la dernière clé de chiffrement avec laquelle il a été configuré. Après l'étape de configuration 104, il d'agit de la clé de chiffrement de l'utilisateur du terminal 1a.

L'étape de chiffrement 110 produit des données chiffrées D au moyen de la clé de chiffrement.

Les données chiffrées D sont émises 111 par la carte réseau 2 du terminal 1a sur le réseau vers le terminal 1B.

Dans le cas où les données chiffrées D sont contenues dans une trame selon la norme IEEE 802 LAN, l'adresse mac du terminal destinataire 1b des données utiles est contenu dans une entête de la trame.

En référence à la **figure 5****,** le terminal 1b destinataire des données chiffrées D met en oeuvre les étapes suivantes.

Le terminal 1b reçoit 112 par son interface réseau 2 les données chiffrées D émises par le terminal 1a.

À ce stade, on considère que le terminal 1b ne connaît pas la clé de déchiffrement K nécessaire au déchiffrement des données D.

Après réception 112 des données chiffrées D, le terminal 1B émet une requête de déchiffrement RK à destination du serveur de contrôle 3.

La requête RK a pour fonction de demander à ce serveur 3 la clé de déchiffrement K nécessaire au déchiffrement des données chiffrées D. La requête de déchiffrement comprend par exemple l'adresse MAC du terminal 1a (extraite de la trame que le terminal 1b a reçue au cours de l'étape 112), et l'adresse MAC du terminal 1b lui-même.

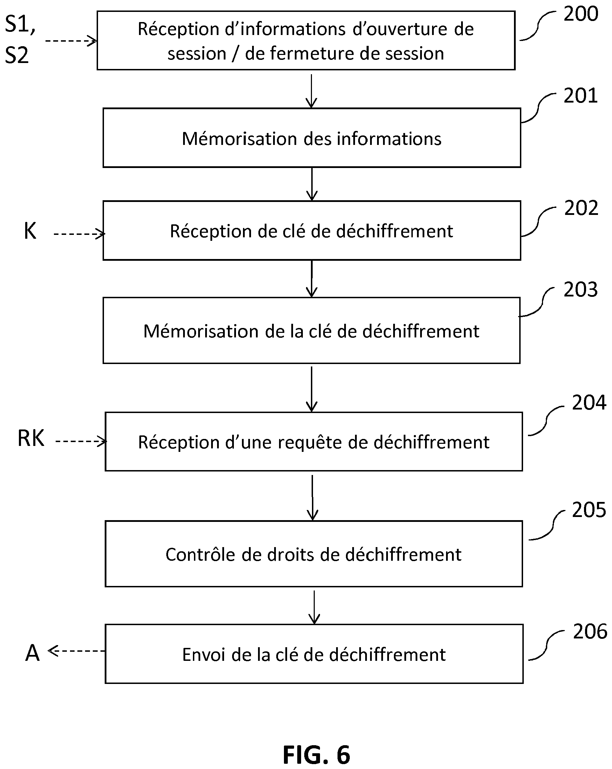

En référence la **figure 6****,** le serveur 3 met en oeuvre les étapes suivantes.

L'interface réseau 32 reçoit 200 les informations d'ouverture S1 et de fermeture S2 émises par le terminal 1a au cours des étapes 103, 107 décrites précédemment en relation avec la figure 3, et transmet ces informations S1, S2 à l'unité de traitement 30.

L'unité de traitement 30 commande la mémorisation 201 des informations S1 et S2 dans la mémoire 34 du serveur 3.

L'interface réseau 32 reçoit en outre 202 la clé de déchiffrement K émises par le terminal 1a au cours de l'étape 102 décrite précédemment en relation avec la figure 3, et transmet ces informations S1, S2 à l'unité de traitement 30.

L'unité de traitement 30 commande la mémorisation 201 des de la clé de déchiffrement dans la mémoire 34 du serveur 3.

L'interface réseau 32 reçoit 204 la requête de déchiffrement RK émise par le terminal 1b au cours de l'étape 113 décrites précédemment en relation avec la figure 4, et transmet ces informations S1, S2 à l'unité de traitement 30.

La réception de la requête RK déclenche un contrôle 205 de droits de déchiffrement mis en oeuvre par l'unité de contrôle 20.

L'étape de contrôle 205 a pour fonction de déterminer :
- la clé de déchiffrement pertinente pour déchiffrer les données D est disponible (la clé de déchiffrement K),
- si le terminal 1b émetteur de la requête RK cette clé de déchiffrement pertinente est autorisé à utiliser la clé K.

L'unité de contrôle recherche dans la mémoire 34 une clé de déchiffrement en provenance d'un terminal dont l'adresse MAC correspond à l'adresse MAC du terminal émetteur de la requête RQ. Dans l'exemple considéré, la clé L recherchée est la clé de chiffrement K est bien présente dans la mémoire 34.

Plusieurs stratégies de contrôle sont envisageables.

Une première stratégie, relativement simple, se fonde sur l'examen d'adresses MAC.

Selon cette première stratégie, sont stockées dans la mémoire 34 des règles d'autorisation associant une adresse MAC source et une adresse MAC destinataire.

L'unité de contrôle recherche une règle associant l'adresse MAC du terminal 1a et l'adresse MAC du terminal 1b dans la mémoire 34.

Si une telle règle est trouvée, le terminal 1b est autorisé à utiliser la clé de déchiffrement K. Dans ce cas, la clé de déchiffrement K est envoyée par le serveur 3 au terminal 1b dans un message de réponse A.

Si une telle règle n'est pas trouvée, le terminal 1b n'est pas autorisé à utiliser la clé de déchiffrement K et la clé de déchiffrement K n'est pas envoyée. Dans ce cas, un message de réponse A peut tout de même être envoyé avec un message d'erreur.

Une première stratégie se fonde sur l'examen croisé d'adresses MAC et d'utilisateurs.

Selon cette deuxième stratégie, sont stockées dans la mémoire 34 des règles d'autorisation associant un identifiant d'utilisateur source (compris dans les messages S1, S2) et un identifiant d'utilisateur destinataire (compris dans la requête RK).

L'unité de contrôle recherche une règle associant l'utilisateur du terminal 1a pour lequel la clé de déchiffrement K a été générée, et l'utilisateur du terminal 1b.

Si une telle règle est trouvée, le terminal 1b est autorisé à utiliser la clé de déchiffrement K. Dans ce cas, la clé de déchiffrement K est envoyée 206 par le serveur 3 au terminal 1b dans un message de réponse A.

Si une telle règle n'est pas trouvée, le terminal 1b n'est pas autorisé à utiliser la clé de déchiffrement K et la clé de déchiffrement K n'est pas envoyée. Dans ce cas, un message d'erreur eut tout de même être envoyé au terminal 1b.

De retour à la **figure 5****,** le programme applicatif du terminal 1b reçoit 114 la clé de déchiffrement K.

Le programme applicatif du terminal 1b configure alors son module de déchiffrement 20 avec la clé de déchiffrement K.

Le module de déchiffrement 20 déchiffre alors les données chiffrées D au moyen de la clé de déchiffrement K reçue du serveur de contrôle 3.

La clé de déchiffrement K peut être mémorisée par le terminal K en vue d'être utilisées pour déchiffrer des données émanant du terminal 1a identifié par son adresse MAC.

Bien entendu, l'invention peut faire l'objet d'autres variantes que celles mentionnées précédemment.

Le module de chiffrement/déchiffrement 20 peut être un module logiciel intégré au système d'exploitation du terminal 1, et non un module délocalisé sur une carte réseau.

Le procédé décrit peut s'appliquer à d'autres types de trames que celles du type IEEE 802 LAN.

## Revendications

1. Procédé de chiffrement mis en oeuvre par un terminal comprenant un système d'exploitation accessible par plusieurs utilisateurs et un module de chiffrement de données à destination d'un autre terminal, le procédé comprenant des étapes de :
• détection (100) d'ouverture d'un accès au système d'exploitation par un utilisateur,
• en réponse à la détection (100) d'ouverture, paramétrage (104) du module de chiffrement (20) avec une clé de chiffrement propre à l'utilisateur pour chiffrer des données à destination de l'autre terminal,
dans lequel la clé de chiffrement est générée (101) par le terminal, ou est mémorisée dans une mémoire (16, 22) du terminal avant la détection d'ouverture d'accès (100),
le procédé comprenant en outre les étapes suivantes de :
• génération (101) ou chargement depuis une mémoire du terminal (16, 22) d'une clé de déchiffrement (K) adaptée pour déchiffrer des données utiles chiffrées au moyen de la clé de chiffrement,
• envoi (102) de la clé de déchiffrement (K) à un serveur de contrôle (3),
• envoi (103, 107), au serveur de contrôle (3), d'informations (S1, S2) indicatives d'ouverture et/ou de fermeture d'accès au système d'exploitation par l'utilisateur, le serveur de contrôle (3) étant adapté pour contrôler l'utilisation de la clé de déchiffrement (K) par un autre terminal en fonction de la dernière information indicative envoyée.

2. Procédé selon la revendication précédente, comprenant en outre les étapes de :
• détection (105) de fermeture de l'accès au système d'exploitation par l'utilisateur,
• paramétrage (106) du module de chiffrement (20) au moyen d'une clé factice en réponse à la détection de fermeture.

3. Procédé selon l'une des revendications précédentes, dans lequel la détection (100, 105) comprend un abonnement à un signal défini par le système d'exploitation, le signal étant représentatif d'une ouverture ou d'une fermeture d'accès au système d'exploitation, et une interception du signal.

4. Procédé selon la revendication précédente, dans lequel l'abonnement est mis en oeuvre par un programme applicatif qui commande par ailleurs l'étape de paramétrage du module de chiffrement.

5. Procédé selon l'une des revendications précédentes, dont les étapes sont mises en oeuvre pour un accès courant au système d'exploitation par l'utilisateur et un accès suivant au système d'exploitation par l'utilisateur, et dans lequel la clé de chiffrement avec laquelle le module de chiffrement est paramétré au cours de l'accès suivant est différente de la clé de chiffrement avec laquelle le module de chiffrement est paramétré au cours de l'accès courant.

6. Procédé selon l'une des revendications précédentes, dans lequel chaque clé est générée (101) par le module de chiffrement.

7. Procédé selon l'une des revendications précédentes, dans lequel le module de chiffrement (20) est intégré à une carte réseau (2) indépendante du système d'exploitation.

8. Procédé selon l'une des revendications précédentes, dans lequel le module de chiffrement (20) chiffre les données utiles de trames selon la norme IEEE 802 LAN au moyen de la clé de chiffrement.

9. Procédé selon l'une des revendications précédentes, dans lequel le module de chiffrement est configuré pour chiffrer toute donnée destinée à être émise sur un réseau par une carté réseau du terminal.

10. Produit programme d'ordinateur comprenant des instructions de code pour l'exécution des étapes du procédé selon l'une des revendications précédentes, lorsque ce produit programme est exécuté par un terminal.

11. Kit de chiffrement comprenant :
• un module de chiffrement (20) adapté pour chiffrer des données au moyen d'une clé, et
• un produit programme d'ordinateur selon la revendication précédente, adapté pour configurer la clé utilisée par le module de chiffrement.

12. Kit de chiffrement selon la revendication précédente, comprenant une carte réseau (2), la carte réseau (2) intégrant le module de chiffrement (20).

13. Procédé de contrôle de droits de déchiffrement de données comprenant la mise en oeuvre, par un premier terminal (1a), du procédé de chiffrement selon l'une des revendications 1 à 9, et les étapes suivantes mises en oeuvre par un serveur de contrôle:
• réception (202) d'une clé de déchiffrement (K) adaptée pour déchiffrer des données chiffrées au moyen de la clé de chiffrement propre à l'utilisateur,
• réception (200) d'informations indiquant une ouverture et/ou une fermeture d'accès, par l'utilisateur, au système d'exploitation du premier terminal (1a),
• réception (204) d'une requête (RK) émise par un deuxième terminal, la requête demandant une clé de déchiffrement (K) pour déchiffrer des données chiffrées émanant du premier terminal,
• envoi (206) de la clé de déchiffrement (K) au deuxième terminal (1b) en réponse à la requête (RK), en fonction de la dernière information reçue du premier terminal (1a).

14. Procédé selon la revendication précédente, dans lequel :
• la clé de déchiffrement (K) est envoyée au deuxième terminal (1b) si la dernière information reçue indique une ouverture d'accès par l'utilisateur,
• la clé de déchiffrement (K) n'est pas envoyée au deuxième terminal (1b) si la dernière information reçue indique une fermeture d'accès par l'utilisateur.

15. Procédé selon l'une des revendications 12 à 13, comprenant en outre la réception d'une adresse identifiant le premier terminal, la réception d'une adresse identifiant le deuxième terminal (1b), dans lequel la clé de déchiffrement (K) est envoyée au deuxième terminal en fonction des deux adresses.

16. Procédé selon l'une des revendications 12 à 14, comprenant en outre la réception d'un identifiant de l'utilisateur du premier terminal, la réception d'un identifiant d'un utilisateur du deuxième terminal, dans lequel la clé de déchiffrement (K) est envoyée au deuxième terminal en fonction des deux identifiants.

17. Système comprenant un premier terminal configuré pour mettre en oeuvre le procédé de chiffrement selon l'une des revendications 1 à 9, et un serveur (2) de contrôle de droits de déchiffrement, le serveur (2) comprenant :
• une mémoire (34) adaptée pour mémoriser une clé de déchiffrement, la clé de déchiffrement étant adaptée pour déchiffrer des données chiffrées au moyen d'une clé de chiffrement propre à un utilisateur,
• une interface réseau (32) adaptée pour recevoir :
o des informations indiquant une ouverture d'accès par l'utilisateur au système d'exploitation d'un premier terminal,
o une requête émise par un deuxième terminal, la requête demandant une clé de déchiffrement pour déchiffrer des données chiffrées émanant du premier terminal, et
• une unité de contrôle (30) adaptée pour commander l'envoi de la clé de déchiffrement (K) au deuxième terminal via l'interface réseau en réponse à la requête, en fonction des informations reçues.

## Patentansprüche

1. Verschlüsselungsverfahren, das durch ein Endgerät durchgeführt wird, das ein Betriebssystem, auf das mehrere Benutzer Zugriff haben, und ein Modul zur Verschlüsselung von Daten, die für ein anderes Endgerät bestimmt sind, umfasst, wobei das Verfahren die folgenden Schritte umfasst:
• Feststellung (100) der Öffnung eines Zugriffs auf das Betriebssystem durch einen Benutzer,
• als Reaktion auf die Feststellung (100) der Öffnung, Parametrisierung (104) des Verschlüsselungsmoduls (20) mit einem dem Benutzer eigenen Verschlüsselungsschlüssel, um Daten zu verschlüsseln, die für das andere Endgerät bestimmt sind,
wobei der Verschlüsselungsschlüssel durch das Endgerät erzeugt (101) wird oder vor der Feststellung der Zugriffsöffnung (100) in einem Speicher (16, 22) des Endgeräts gespeichert wird,
wobei das Verfahren ferner die folgenden Schritte umfasst:
• Erzeugung (101) oder Laden, ausgehend von einem Speicher des Endgeräts (16, 22), eines Entschlüsselungsschlüssels (K), der angepasst ist, um verschlüsselte Nutzdaten mittels des Verschlüsselungsschlüssels zu entschlüsseln,
• Senden (102) des Entschlüsselungsschlüssels (K) an einen Steuerserver (3),
• Senden (103, 107), an den Steuerserver (3), von Informationen (S1, S2), welche die Öffnung und/oder Schließung eines Zugriffs auf das Betriebssystem durch den Benutzer angeben, wobei der Steuerserver (3) angepasst ist, um die Verwendung des Entschlüsselungsschlüssels (K) durch ein anderes Endgerät in Abhängigkeit von der letzten gesendeten angebenden Information zu steuern.

2. Verfahren nach dem vorhergehenden Anspruch, das ferner die folgenden Schritte umfasst:
• Feststellung (105) der Schließung des Zugriffs auf das Betriebssystem durch den Benutzer,
• Parametrisierung (106) des Verschlüsselungsmoduls (20) mittels eines falschen Schlüssels als Reaktion auf die Schließungsfeststellung.

3. Verfahren nach einem der vorhergehenden Ansprüche, wobei die Feststellung (100, 105) ein Abonnement für ein durch das Betriebssystem definiertes Signal umfasst, wobei das Signal für eine Öffnung oder eine Schließung eines Zugriffs auf das Betriebssystems und ein Abfangen des Signals repräsentativ ist.

4. Verfahren nach dem vorhergehenden Anspruch, wobei das Abonnement durch ein Applikationsprogramm durchgeführt wird, das darüber hinaus den Schritt der Parametrisierung des Verschlüsselungsmoduls steuert.

5. Verfahren nach einem der vorhergehenden Ansprüche, dessen Schritte für einen gegenwärtigen Zugriff auf das Betriebssystem durch den Benutzer und einen folgenden Zugriff auf das Betriebssystem durch den Benutzer durchgeführt werden, und wobei der Verschlüsselungsschlüssel, mit dem das Verschlüsselungsmodul während des folgenden Zugriffs parametrisiert wird, sich von dem Verschlüsselungsschlüssel unterscheidet, mit dem das Verschlüsselungsmodul während des gegenwärtigen Zugriffs parametrisiert wird.

6. Verfahren nach einem der vorhergehenden Ansprüche, wobei jeder Schlüssel durch das Verschlüsselungsmodul erzeugt (101) wird.

7. Verfahren nach einem der vorhergehenden Ansprüche, wobei das Verschlüsselungsmodul (20) in eine von dem Betriebssystem unabhängige Netzwerkkarte (2) integriert ist.

8. Verfahren nach einem der vorhergehenden Ansprüche, wobei das Verschlüsselungsmodul (20) die Nutzdaten von Rahmen gemäß dem Standard IEEE 802 LAN mittels des Verschlüsselungsschlüssels verschlüsselt.

9. Verfahren nach einem der vorhergehenden Ansprüche, wobei das Verschlüsselungsmodul dazu ausgestaltet ist, jedes Datenelement zu verschlüsseln, das dazu bestimmt ist, durch eine Netzwerkkarte des Endgeräts auf einem Netzwerk gesendet zu werden.

10. Computerprogrammprodukt, das Codeanweisungen für die Ausführung der Schritte des Verfahrens nach einem der vorhergehenden Ansprüche umfasst, wenn dieses Programmprodukt durch ein Endgerät ausgeführt wird.

11. Verschlüsselungskit, das Folgendes umfasst:
• ein Verschlüsselungsmodul (20), das angepasst ist, um Daten mittels eines Schlüssels zu verschlüsseln, und
• ein Computerprogrammprodukt nach dem vorhergehenden Anspruch, das angepasst ist, um den durch das Verschlüsselungsmodul verwendeten Schlüssel zu konfigurieren.

12. Verschlüsselungskit nach dem vorhergehenden Anspruch, das eine Netzwerkkarte (2) umfasst, wobei die Netzwerkkarte (2) das Verschlüsselungsmodul (20) integriert.

13. Verfahren zur Steuerung von Datenentschlüsselungsrechten, welches das Durchführen, durch ein erstes Endgerät (1a), des Verschlüsselungsverfahrens nach einem der Ansprüche 1 bis 9 und die folgenden Schritte umfasst, die durch einen Steuerserver durchgeführt werden:
• Empfang (202) eines Entschlüsselungsschlüssels (K), der angepasst ist, um verschlüsselte Daten mittels des dem Benutzer eigenen Verschlüsselungsschlüssels zu entschlüsseln,
• Empfang (200) von Informationen, die eine Öffnung und/oder eine Schließung eines Zugriffs durch den Benutzer auf das Betriebssystem des ersten Endgeräts (1a) angeben,
• Empfang (204) einer von einem zweiten Endgerät ausgegebenen Anfrage (RK), wobei die Anfrage einen Entschlüsselungsschlüssel (K) zum Entschlüsseln der verschlüsselten Daten anfordert, die von dem ersten Endgerät kommen,
• Senden (206) des Entschlüsselungsschlüssels (K) an das zweite Endgerät (1b) als Reaktion auf die Anfrage (RK) in Abhängigkeit von der letzten von dem ersten Endgerät (1a) empfangenen Information.

14. Verfahren nach dem vorhergehenden Anspruch, wobei:
• der Entschlüsselungsschlüssel (K) an das zweite Endgerät (1b) gesendet wird, wenn die letzte empfangene Information eine Zugriffsöffnung durch den Benutzer angibt,
• der Entschlüsselungsschlüssel (K) nicht an das zweite Endgerät (1b) gesendet wird, wenn die letzte empfangene Information eine Zugriffschließung durch den Benutzer angibt.

15. Verfahren nach einem der Ansprüche 12 bis 13, das ferner den Empfang einer Adresse, die das erste Endgerät identifiziert, und den Empfang einer Adresse umfasst, die das zweite Endgerät (1b) identifiziert, wobei der Entschlüsselungsschlüssel (K) in Abhängigkeit von den beiden Adressen an das zweite Endgerät gesendet wird.

16. Verfahren nach einem der Ansprüche 12 bis 14, das ferner den Empfang einer Kennung des Benutzers des ersten Endgeräts und den Empfang einer Kennung eines Benutzers des zweiten Endgeräts umfasst, wobei der Verschlüsselungsschlüssel (K) in Abhängigkeit von den beiden Kennungen an das zweite Endgerät gesendet wird.

17. System, das ein erstes Endgerät, das dazu ausgestaltet ist, das Verschlüsselungsverfahren nach einem der Ansprüche 1 bis 9 durchzuführen, und einen Server (2) zur Steuerung von Entschlüsselungsrechten umfasst, wobei der Server (2) Folgendes umfasst:
• einen Speicher (34), der angepasst ist, um einen Entschlüsselungsschlüssel zu speichern, wobei der Entschlüsselungsschlüssel angepasst ist, um verschlüsselte Daten mittels eines einem Benutzer eigenen Verschlüsselungsschlüssels zu entschlüsseln,
• eine Netzwerk-Schnittstelle (32), die angepasst ist, um Folgendes zu empfangen:
o Informationen, die eine Öffnung eines Zugriffs auf das Betriebssystem eines ersten Endgeräts durch den Benutzer angeben,
o eine Anfrage, die von dem zweiten Endgerät ausgegeben wird, wobei die Anfrage einen Entschlüsselungsschlüssel zum Entschlüsseln der verschlüsselten Daten anfordert, die von dem ersten Endgerät kommen, und
• eine Steuereinheit (30), die angepasst ist, um das Senden des Entschlüsselungsschlüssels (K) an das zweite Endgerät über die Netzwerk-Schnittstelle als Reaktion auf die Anfrage in Abhängigkeit von den empfangenen Informationen zu steuern.

## Claims

1. A method of encryption implemented by a terminal comprising an operating system accessible by a plurality of users and a module for encrypting data to be sent to another terminal, the method comprising steps of:
• detecting (100) a user opening access to the operating system,
• in response to the detecting (100) of opening, setting (104) the encryption module (20) with a user-specific encryption key to encrypt data to be sent to the other terminal,
wherein the encryption key is generated (101) by the terminal, or is stored in a memory (16, 22) of the terminal prior to the access opening detection (100),
the method further comprising the following steps of:
• generating (101) or loading from a terminal memory (16, 22) of a decryption key (K) adapted to decrypt payload data encrypted by means of the encryption key,
• sending (102) the decryption key (K) to a control server (3),
• sending (103, 107), to the control server (3), information (S1, S2) indicative of the opening and/or closing of access to the operating system by the user, the control server (3) being adapted to control the use of the decryption key (K) by another terminal as a function of the last indicative information sent.

2. The method of the preceding claim, further comprising the steps of:
• detecting (105) a closure of access to the operating system by the user,
• setting (106) of the encryption module (20) with a dummy key in response to the detecting the closure.

3. A method according to any of the preceding claims, wherein the detecting (100, 105) comprises subscribing to a signal defined by the operating system, the signal being representative of an opening or closing of access to the operating system, and intercepting the signal.

4. The method of the preceding claim, wherein the subscription is implemented by an application program that otherwise controls the step of setting the encryption module.

5. The method of any of the preceding claims, the steps of which are implemented for a current access to the operating system by the user and a subsequent access to the operating system by the user, and wherein the encryption key with which the encryption module is set during the subsequent access is different from the encryption key with which the encryption module is set during the current access.

6. The method of any of the preceding claims, wherein each key is generated (101) by the encryption module.

7. A method according to any of the preceding claims, wherein the encryption module (20) is integrated into an operating system independent network card (2).

8. The method according to any of the preceding claims, wherein the encryption module (20) encrypts the frame payload according to the IEEE 802 LAN standard using the encryption key.

9. A method according to any of the preceding claims, wherein the encryption module is configured to encrypt any data intended to be transmitted over a network by a network card of the terminal.

10. A computer program product comprising code instructions for performing the steps of the method of any of the preceding claims, when said program product is executed by a terminal.

11. Encryption kit including:
• an encryption module (20) adapted to encrypt data using a key, and
• A computer program product according to the preceding claim, adapted to configure the key used by the encryption module.

12. An encryption kit according to the preceding claim, comprising a network card (2), the network card (2) incorporating the encryption module (20).

13. A method of controlling data decryption rights comprising implementing, by a first terminal (1a), the encryption method of any of claims 1 to 9, and the following steps implemented by a control server:
• receiving (202) a decryption key (K) adapted to decrypt data encrypted with the user's own encryption key,
• receiving (200) information indicating an opening and/or closing of access, by the user, to the operating system of the first terminal (1a),
• receiving (204) a request (RK) from a second terminal, the request requesting a decryption key (K) to decrypt encrypted data from the first terminal,
• sending (206) the decryption key (K) to the second terminal (1b) in response to the request (RK), according to the last information received from the first terminal (1a).

14. The method of the preceding claim, wherein:
• the decryption key (K) is sent to the second terminal (1b) if the last information received indicates an access opening by the user,
• the decryption key (K) is not sent to the second terminal (1b) if the last information received indicates a closure of access by the user.

15. The method of any of claims 12 to 13, further comprising receiving an address identifying the first terminal, receiving an address identifying the second terminal (1b), wherein the decryption key (K) is sent to the second terminal based on the two addresses.

16. The method of any of claims 12 to 14, further comprising receiving an identifier of the user of the first terminal, receiving an identifier of a user of the second terminal, wherein the decryption key (K) is sent to the second terminal based on the two identifiers.

17. A system comprising a first terminal configured to implement the encryption method of any of claims 1 to 9, and a decryption rights control server (2), the server (2) comprising:
• a memory (34) adapted to store a decryption key, the decryption key being adapted to decrypt data encrypted with a user's own encryption key,
• a network interface (32) adapted to receive :
o information indicating an opening of access by the user to the operating system of a first terminal,
o a request from a second terminal, the request requesting a decryption key to decrypt encrypted data from the first terminal, and
• a control unit (30) adapted to control the sending of the decryption key (K) to the second terminal via the network interface in response to the request, according to the information received.
